# EUROPEAN PATENT SPECIFICATION

(11) **EP 2 372 150 B1**
(45) Date of publication and mention of the grant of the patent: **18.12.2013**
(21) Application number: 10158262.5
(22) Date of filing: 29.03.2010
(51) Int. Cl.: F03D 11/02

(54) **Wind turbine**
Windturbine
Éolienne

(43) Date of publication of application: 05.10.2011
(73) Proprietor: Alstom Renovables España, S.L., 08005 Barcelona (ES)
(72) Inventor: Castell Martínez, Daniel, 08005 Barcelona (ES)
(74) Representative: ZBM Patents

(56) References cited:
- WO-A1-01/94779
- WO-A1-02/33254
- WO-A1-03/037608
- WO-A1-2011/061363
- JP-A- 2009 138 578
- US-A- 4 757 211
- US-A1- 2007 166 147
- Stiesdal, Henrik: "The Wind Turbine - Components and Operation" Denmark 1999, XP002598491 Retrieved from the Internet: URL:http://www.windmission.dk/workshop/Bon usTUrbine.pdf [retrieved on 2010-08-25]

## Description

The present invention relates to a wind turbine.

Modern wind turbines are commonly used to supply electricity into the electrical grid. Wind turbines of this kind generally comprise a rotor with a rotor hub and a plurality of blades. The rotor is set into rotation under the influence of the wind on the blades. The rotation of the rotor shaft either directly drives the generator rotor ("directly driven") or through the use of a gearbox.

Gearboxes form one of the most maintenance-intensive components of the wind turbine. They need to be inspected regularly and do not always fulfil their expected service life; the gearbox or some of its parts sometimes need to be replaced prematurely. This is due to the high loads and fluctuating loads to which a gearbox is subjected. Particularly, the bending loads on the blades, which may be transmitted through the rotor shaft to the gearbox are damaging.

Direct drive wind turbines do not suffer from the problems related to the gearbox. However, since there is no speed increase, the generator shaft rotates very slowly. As a consequence, a large and expensive generator is generally needed to be able to generate electricity in an effective way. Additionally, when bending loads and movements (and corresponding deformations) are transmitted through the rotor shaft to the generator, it may not be possible to maintain a constant air gap between generator rotor and generator stator. Moreover, high bending loads could even cause structural damage to parts of the generator, e.g. its bearings. Replacement or repair of such generator parts may be very expensive due to the size and related cost of the generator.

Also in the case of more integrated direct drive wind turbine designs, which lack a rotor shaft and which have a direct coupling between the hub or its blades and the generator's rotor (known from e.g. DE 10255745), the bending moments and deformations are directly transmitted from the hub to the rotor and/or the stator, making it more difficult to minimize air gap variations.

In offshore applications (both near-shore and far offshore), maintenance costs form an important part of the operating cost of a wind turbine. Therefore, in these kinds of applications, a direct drive configuration is often chosen so as to avoid the maintenance cost related to a gearbox. However, this does not resolve the aforementioned problems relating to the transmission of bending loads, associated deformations to the generator, and variations in the generator air gap.

The cause of the transmission of the bending loads and deformations from the blades and hub to the generator lies in the wind turbine configuration. In most conventional wind turbines, the rotor hub is mounted on one end of the rotor shaft. The rotor shaft is rotatably mounted in a support structure within the nacelle on top of the wind turbine tower. The rotor thus forms an overhanging structure which transmits torque, but additionally transmits cyclical bending loads due to the loads on the blades and the weight of the hub and blades. These bending loads are transmitted to the generator (in the case of direct drive turbines) causing air gap variations.

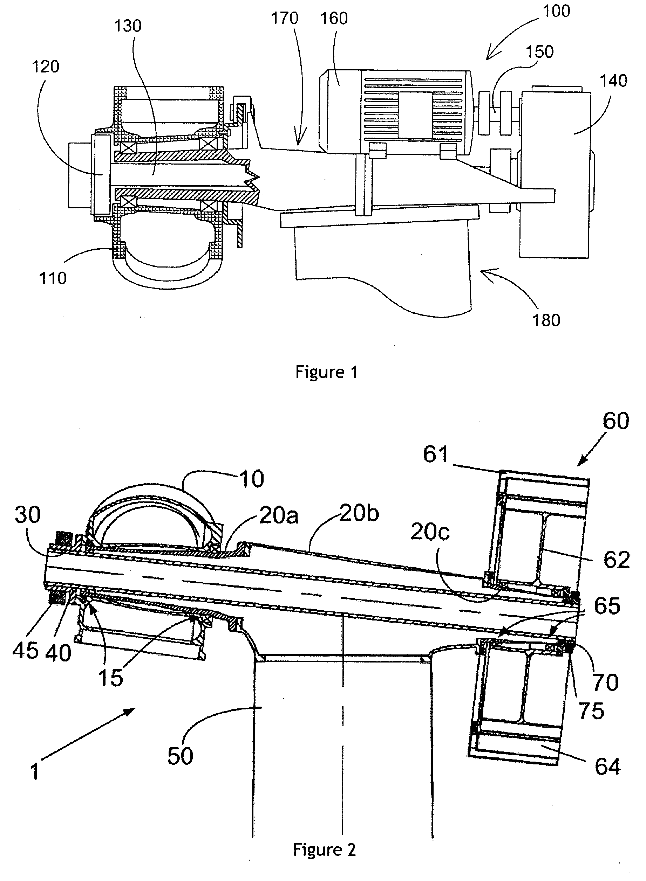

In order to solve this problem, it is known from e.g. ES 2 163 362 to provide a wind turbine tower with a forward extending frame. The rotor hub with its plurality of blades is mounted upon said frame and can rotate; the rotor hub is coupled to a rotor shaft located within said frame. Such a wind turbine has been schematically indicated in figure 1. In figure 1, a wind turbine 100 comprises a hub 110, which is rotatably mounted upon frame 170, at a distal end of said frame. Frame 170 is mounted upon tower 180. A coupling element 120 couples rotor shaft 130 to hub 110. The rotation of rotor shaft 130 is transformed with a gearbox 140 to a fast rotation of output shaft 150 which drives generator 160.

With this kind of configuration comprising a hub mounted on a frame, the loads due to the weight of hub and blades are transmitted more directly via the frame to the tower, whereas the rotor shaft transmits mainly torque to the gearbox (and/or generator), thus substantially avoiding undesired deformations in the drive train. This represents a major improvement with respect to other prior art wind turbines, but the transmission of bending loads from the blades to the rotor shaft, (and through the rotor shaft to the gearbox) cannot be avoided entirely.

A similar wind turbine configuration as disclosed in ES 2 163 362 is known from US 4 757 211 A1.

There still exists a need for a direct drive wind turbine, wherein the transfer of bending loads and movements from the rotor hub to the generator can substantially be reduced. It is an object of the present invention to fulfil this need.

In a first aspect, the present invention provides a wind turbine according to claim 1.

In this aspect of the invention, the coupling between the shaft and the hub is adapted to transmit the torque about the hub's rotational axis from said hub to said shaft while limiting the transmission of other loads (e.g. bending moments, transversal and axial loads). It should be understood that the coupling cannot avoid the transmission of these other loads completely. However, the coupling may be relatively flexible with respect to these other loads, so that they are transmitted through different load paths (particularly through the frame). Also the arrangement of the generator should be understood in the same way: although the transmission of other loads (bending moments, transversal and axial loads) cannot be completely avoided, their transmission will be substantially limited.

With this configuration, potentially damaging bending loads and deformations to which the hub is inevitably subjected may be avoided in the generator. The connection between the hub and the generator through the shaft is relatively stiff with respect to torsion but flexible with respect to bending loads and movements. These loads are thereby transmitted directly from the hub to the frame to the tower.

The shaft is connected to the generator rotor through a non-rigid second coupling, and said second coupling is adapted to transmit torque about the shaft's rotational axis from the shaft to the generator while substantially limiting the transmission of other loads. Optionally, said second coupling comprises circular splines. Another option is that the second coupling comprises a centre piece from which a plurality of spokes extend substantially radially, said centre piece being mounted on said shaft, and flexible elements are arranged to connect the spokes to the generator rotor. Yet a further option is that said second coupling comprises a centre piece mounted on said shaft, said centre piece comprising a substantially circular disc, said circular disc being connected to the generator rotor through a plurality of circumferentially arranged axial bolts, wherein said bolts are arranged within said circular disc with a plurality of flexible bushings.

In not claimed embodiments, the shaft is rigidly connected to the generator rotor, and the generator stator is supported by and flexibly connected to a fixed structure through a third coupling. The third coupling may e.g. be connected to a part of the frame, a flange connected to the frame or another suitable component. In this sense, a "fixed" structure is to be understood as a non-rotating structure that is fixed with respect to the nacelle, such as the nacelle itself, or the frame upon which the hub is mounted. It will be clear that strictly speaking, these components are not completely "fixed", since they may rotate with respect to the tower with the help of a yaw mechanism.

Preferably, this third coupling will be relatively stiff with respect to torsion, but flexible with respect to other loads (so that these loads are not transferred from the stator to the frame).

In some embodiments, one or more bearings are provided within the frame to support the shaft.

In some embodiments, said first coupling comprises a centre piece from which a plurality of spokes extends radially, said centre piece being mounted on said shaft, and the hub is provided with a plurality of circumferentially arranged axial protrusions, and flexible elements are arranged to connect the spokes to said protrusions. In other embodiments, said first coupling comprises a centre piece mounted on said shaft, said centre piece comprising a substantially circular disc, said circular disc being connected to the hub through a plurality of circumferentially arranged axial bolts, wherein said bolts are arranged within said circular disc with a plurality of flexible bushings. Within the scope of the invention, even further embodiments of the first coupling may be used, comprising e.g. suitably arranged elastic or visco-elastic elements, or yet other types of elements that yield to bending loads etc.

In some embodiments, said before-mentioned centre piece may be mounted on said shaft with a shrink disc. In other embodiments however, said centre piece may be welded, bolted or connected through other suitable means.

In some embodiments, the generator rotor is arranged radially outside of the generator stator. In other embodiments, the generator stator is arranged radially outside of the generator rotor. Within the scope of the invention, even other embodiments are possible, e.g. configurations wherein the generator rotor and stator are axially arranged with respect to each other.

In some embodiments of the invention, said shaft comprises a front part and a rear part connected with each other. Said front part and said rear part of the shaft are preferably rigidly connected with each other. The division of the shaft in a front part and rear part can make the installation process easier. It may furthermore facilitate the manufacturing of the shaft. On the other hand, the use of one integral shaft may lead to a lower total weight of the shaft.

In some embodiments of the invention, said frame comprises a front part and a rear part, wherein the hub is rotatably mounted on said front part, and the rear part of said frame is rotatably mounted on a tower. The hub is thus able to rotate around its rotational axis and the rear part of the frame is able to rotate about the tower's axis. Within the scope of the invention, the frame may be formed of one integral part or may comprise two or more separate parts. In one embodiment, the frame comprises three parts: a front part carrying the hub, a middle part rotatably mounted on the wind turbine tower and a rear part carrying the generator. The frame comprising a plurality of separate parts may have advantages for the installation of the wind turbine.

The frame may furthermore be of any suitable shape and configuration: the frame may e.g. have a circular, elliptical, rectangular or other cross-section. The frame may be a forged component but may also be formed by e.g. a plurality of beams or a suitable truss structure.

In some embodiments of the invention, the shaft is a "traditional" solid shaft. In preferred embodiments of the invention however, the shaft may be a tubular hollow shaft. Due to the reduced loads in the shaft, the shaft may be made more lightweight. Instead of a conventional solid shaft, a tubular hollow shaft may be employed in some embodiments of the invention.

Particular embodiments of the present invention will be described in the following, only by way of non-limiting examples, with reference to the appended drawings, in which:
Figure 1 illustrates a prior art wind turbine;
Figure 2 schematically illustrates a first embodiment of a wind turbine according to the present invention;
Figures 3a - 3c schematically illustrate some embodiments of couplings between the hub and the rotor shaft which may be used in embodiments of the present invention;
Figure 4 schematically illustrates a second embodiment of a wind turbine according to the present invention;
Figure 5 schematically illustrates a third embodiment of a wind turbine according to the present invention;
Figure 6 schematically illustrates a fourth embodiment of a wind turbine according to the present invention;
Figure 7 schematically illustrates a fifth embodiment of a wind turbine according to the present invention;
Figure 8 schematically illustrates a not claimed embodiment of a wind turbine;
Figure 9 schematically illustrates a coupling between a generator and a frame which may be used in embodiments of the present invention;
Figure 10 schematically illustrates a not claimed embodiment of a wind turbine;
Figures 11a and 11b schematically illustrates a spherical spline connection which may be used in embodiments of the present invention.

Figure 2 schematically illustrates a first embodiment of a wind turbine according to the present invention. Wind turbine 1 comprises a tower 50, upon which frame 20 is mounted. In this embodiment, frame 20 comprises a front part 20a, a middle part 20b, and a rear part 20c. Hub 10 carries a plurality of blades (not shown) and is rotatably mounted with two bearings 15 upon the frame's front part 20a.

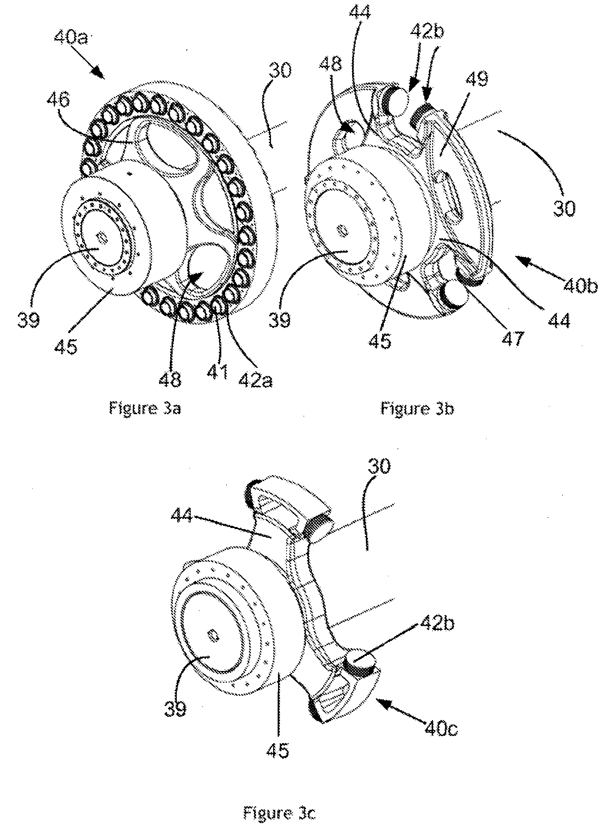

Hub 10 is connected to shaft 30 through coupling element 40. Coupling element 40 is designed such that it transmits torque from the rotor hub 10 to shaft 30, while substantially limiting the transfer of other loads. It will be clear that coupling element 40 may take various suitable forms. Figures 3a-3c illustrates various suitable coupling elements.

In a first embodiment of figure 3a, coupling element 40a connects shaft 30 to hub 10 (not shown in figure 3a). Coupling element 40a comprises a circular disc 46, mounted on shaft 30 with a shrink disc 45. A plurality of holes 48 has been provided in disc 46 to provide access to the hub. The annular rim of disc 46 comprises a plurality of holes, in which bolts are provided to connect the disc to the hub. Bolts 41 are provided in flexible bushings 42a. These bushings 42a may be made of a suitable elastic or flexible material. With this arrangement, the connection between the hub and shaft 30 substantially limits the transfer of any loads other than the torque from the hub. Reference sign 39 indicates a closing element, connected to shrink disc 45, which substantially closes off the shaft and may serve to protect the inside of the shaft from the environment.

Another solution is shown in figure 3b: coupling 40b. A centre piece is provided on shaft 30. Three spokes 44 extend radially from said centre piece. The spokes 44 create openings 47 at their ends. Protrusions from the hub (not shown) can be fitted in these openings 47. Flexible elements 42b connect the spokes 44 to the protrusions on the hub. Annular segments 49 with access holes 48 are provided between spokes 44. Also with this embodiment, the torque is transmitted from the hub, while the transfer of other loads is substantially limited. It shall be clear that the number of spokes may vary freely in this particular embodiment.

A further option is shown in figure 3c: coupling 40c. Similarly as in coupling 40b, a centre piece mounted on shaft 30 has a plurality of radially extending spokes 44. Flexible elements 42b are provided at their distal ends. The spokes may be fitted between suitable protrusions from the hub.

The flexible elements shown in the couplings 40a, 40b and 40c may take many suitable forms. They may be e.g. elastic or visco-elastic. They may be made from e.g. elastomers or from both elastomers and metals. In some embodiments, the stiffness (or flexibility, or elasticity) of the flexible elements may be adjustable. In preferred embodiments, they may be pre-loaded. The most important aspect of the flexible elements is that due to their arrangement and their properties, they yield in a certain extent to all loads, but securely transmit the torque from the hub.

With further reference to figure 2, coupling element 40 is mounted on shaft 30 through a shrink disc 45. Within the scope of the present invention however, coupling element 40 may be mounted on shaft 30 in any other suitable way (e.g. welded, bolted, screwed, interference fit etc.) It may be seen in figure 2 that shaft 30 extends internally of frame 20. A second coupling element 70 is provided which transmits the torque from shaft 30 to the generator rotor 62, while simultaneously limiting the transfer of other loads. The second coupling is similar to the first coupling in the sense that substantially only torque is transmitted. This second coupling may therefore also take a similar shape as the first couplings shown in figures 3a-3c: in some embodiments, the second coupling comprises a centre piece from which a plurality of spokes extend substantially radially, said centre piece being mounted on said shaft, and flexible elements are arranged to connect the spokes to the generator rotor. In other embodiments, the second coupling comprises a centre piece mounted on said shaft, said centre piece comprising a substantially circular disc, said circular disc being connected to the generator rotor through a plurality of circumferentially arranged axial bolts, wherein said bolts are arranged within said circular disc with a plurality of flexible bushings. The invention however is not limited to such examples.

Generator rotor 62 is mounted on frame 20c through suitable bearings 65. The generator stator 64 is radially arranged outside the generator rotor 62. Generator housing 61 is provided for protection from weather influences. Due to the first and second flexible couplings, the transfer of any load other than torque from the hub to the generator is substantially avoided. Since bending loads and accompanying deformations are not transferred, the air gap between generator rotor and stator can be maintained relatively stably.

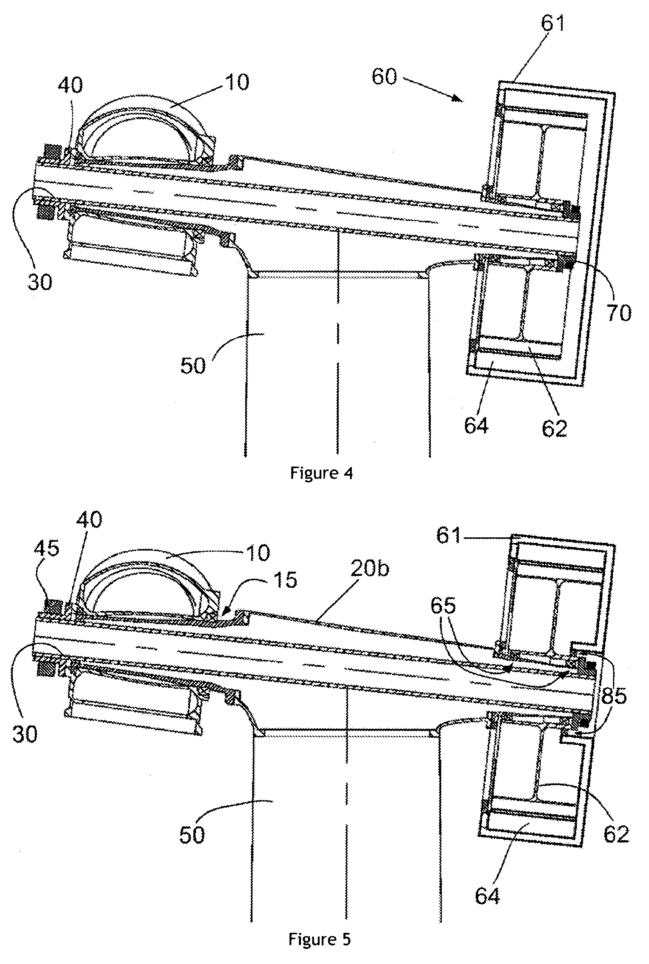

A further embodiment of the present invention is schematically illustrated in figure 4. The same reference signs have been used to denote the same elements. The main difference between the embodiments of figure 4 and 2 is in the generator 60, and more particularly the arrangement of the housing 61. In figure 4, the generator is completely closed, which makes the generator structurally stronger. On the other hand, it comprises more material which may make this embodiment more expensive than the embodiment of figure 2.

Yet a further embodiment is shown in figure 5. In this embodiment, a further bearing 85 is provided between generator housing 61 and generator rotor 62. This bearing further reduces the air gap variations, by minimizing relative movement between the generator stator and rotor.

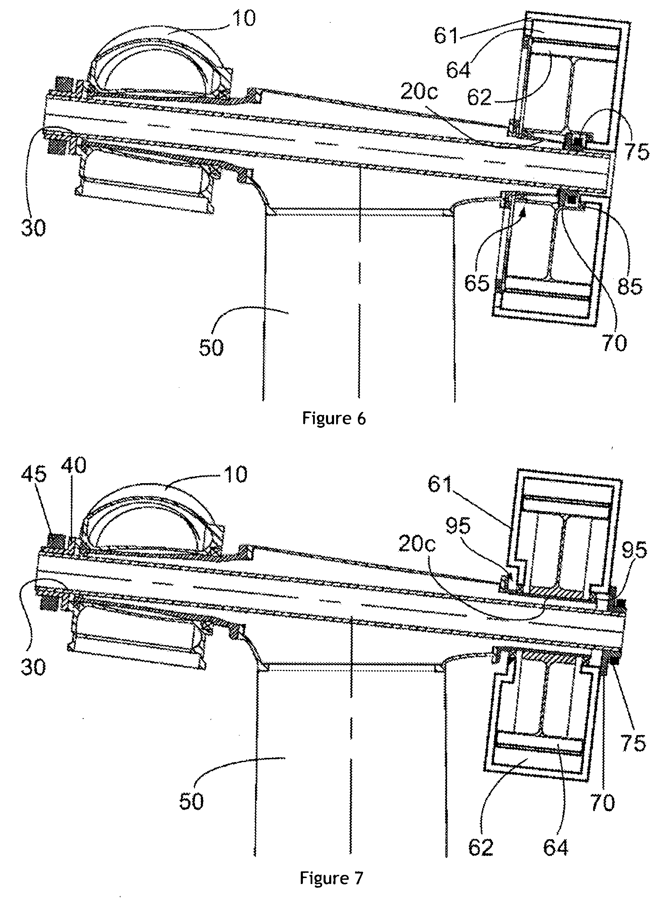

In the embodiment of figure 6, a single bearing 85 is provided between the generator housing 61 and generator rotor 62. Also a single bearing 65 is provided between generator rotor 62 and frame 20c. In this embodiment, coupling element 70 and shrink disc 75 are arranged completely inside generator housing 61.

In the embodiment of figure 7, the generator rotor 62 is arranged radially outside of the generator stator 64. Generator housing 61 is thus formed by the rotor. Bearings 95 are provided between generator housing 61 and frame 20c. A flexible coupling 70, similarly to the ones shown before, is provided between the generator rotor and the rotor shaft 30 to transfer the shaft's torque and substantially limit the transfer of other loads.

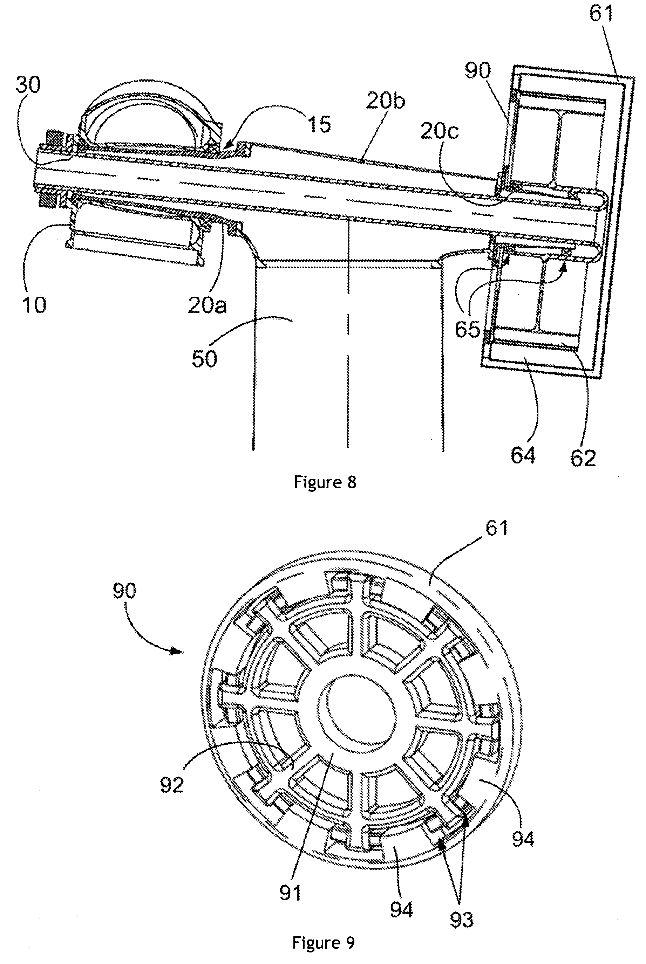

Such a flexible coupling is not provided in the not claimed embodiment of figure 8. The connection between shaft 30 and generator rotor 62 is rigid. The unwanted deformations in the generator and accompanying air gap instability are avoided in a different way: firstly (as in other embodiments), a flexible coupling is provided between rotor hub 10 and shaft 30. Secondly, the generator stator 64 (and housing 61) is supported by and flexibly connected to frame 20c through a third coupling 90. The third coupling 90 is a non-rotatable coupling which is relatively stiff with respect to torsion but relatively flexible with respect to other loads.

A preferred example of such a coupling 90 is shown in figure 9. A centre piece 91 may be mounted on frame 20c. A plurality of spokes 92 extends radially from the centre piece. The generator housing 61 comprises a plurality of radial protrusions 94. These radial protrusions are connected to spokes 92 by suitable flexible elements 93. It will be clear that many different suitable flexible elements of many different suitable materials could be employed. The most important characteristic of the flexible elements is that they yield easily to loads out of the plane of coupling 90.

The combination of the first coupling between hub and shaft and the third coupling between generator stator and frame ensures that air gap variations can be minimised.

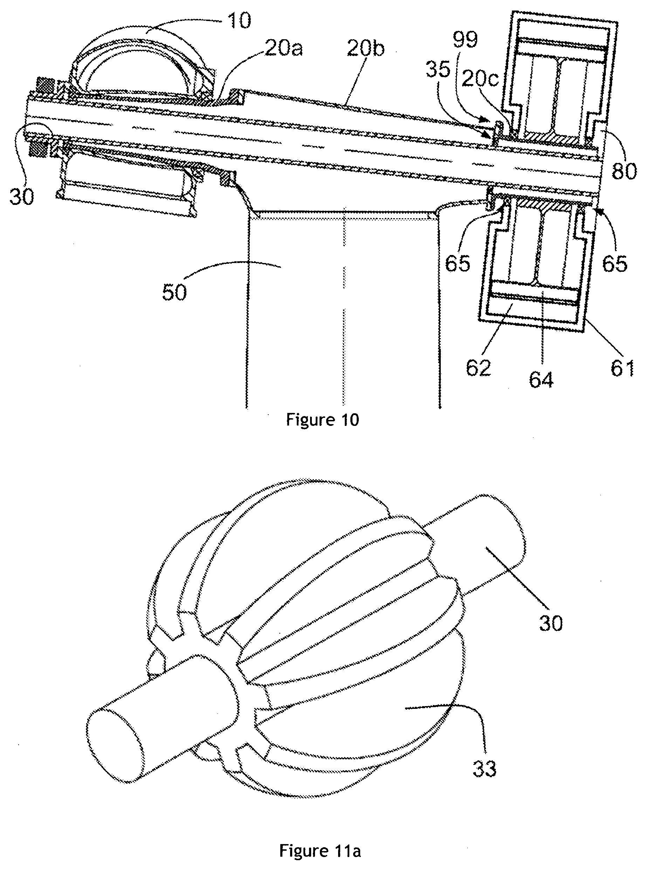

Figure 10 shows a not claimed embodiment. A rigid coupling 80 is provided between rotor shaft 30 and generator housing 61 (and generator rotor 62, which is once again arranged radially external to the generator stator 64). Bearings 65 are provided between the generator rotor and frame 20c. Furthermore, a bearing 35 is provided between rotor shaft and frame 20b. In this embodiment, the connection 99 between frame middle part 20b and frame rear part 20c is such that the transfer of loads other than loads in the plane of the connection are substantially limited. This may be achieved in various possible ways, e.g. with an arrangement shown in figure 9, another suitable arrangement of elastic or flexible elements between the frame parts, or the provision of flexible bushings for bolts or screws used to connect the frame parts together.

In this embodiment, bearing 35 was provided at the junction between frame middle part 20b and frame rear part 20c. In other embodiments, bearing 35 may be placed at a different position.

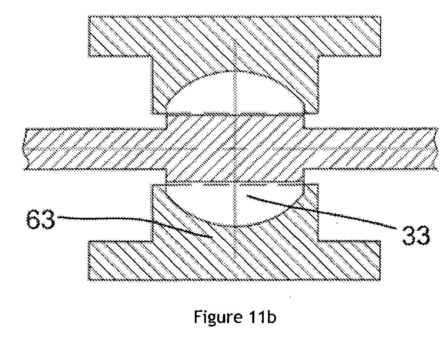

Figures 11 a and 11 b very schematically illustrate another way of a non-rigid coupling between the rotor shaft 30 and the generator rotor 62, which transmits the torque from the shaft to the generator rotor but substantially limits the transfer of other loads. The connection shown uses splines 33 provided on rotor shaft 30 and mating splines 63 provided on the generator rotor. Radially extending splines 33 are shaped like circular segment. Mating splines 63 have a shape that is complementary to splines 33, such that splines 33 fit in them.

When subjected to bending loads, the splines 33 would slide relative to splines 63. When subjected to torque, the loads are transferred directly through splines 33 and 63. Thus, also using this kind of connection one can ensure that torque from the rotor shaft is transferred while substantially limiting the transfer of other loads.

Although in the embodiments shown in the figures, rotor shaft 30 was depicted as a hollow tubular shaft, in other embodiments of the invention, the shaft may be a solid shaft.

And although in the embodiments shown in the figures, the frame 20 was depicted as comprising three separate parts, in other embodiments of the invention, the frame may be unitary or may comprise two or four or more different parts. Within the scope of the invention, the frame may furthermore take a different shape and structure.

The present invention is moreover not limited in any way to the kind of bearings used to mount the hub on the frame or to mount the generator on the frame. Suitable fluid bearings, particularly hydrodynamic or hydrostatic bearings, may be employed. Alternatively, suitable rolling element bearings, such as roller bearings, double-tapered roller bearings, or ball bearings may also be used. The bearings may further be purely radial bearings or radial and axial bearings.

The present invention is furthermore not limited in any way to the kind of generator employed in the wind turbine. Any suitable kind of synchronous or asynchronous generator may be used. In one preferred embodiment of the present invention, the generator rotor is provided with permanent magnets.

Although this invention has been disclosed in the context of certain preferred embodiments and examples, it will be understood by those skilled in the art that the present invention extends beyond the specifically disclosed embodiments to other alternative embodiments and/or uses of the invention and obvious modifications and equivalents thereof. Thus, it is intended that the scope of the present invention herein disclosed should not be limited by the particular disclosed embodiments described before, but should be determined only by a fair reading of the claims that follow.

## Claims

1. Wind turbine comprising a hub (10) carrying one or more blades, a generator (60), a shaft (30), and a first coupling element (40, 40a, 40b, 40c) mounted on the shaft (30) operatively coupling the shaft (30) to a front side of the hub (10), wherein
the hub (10) is rotatably mounted on a frame (20) and adapted to rotate around said frame (20),
the shaft (30) is provided at least partially internally of said frame (20), and wherein
the first coupling element (40, 40a, 40b, 40c) is adapted to transmit the torque about the hub's rotational axis from said hub (10) to said shaft (30) while substantially limiting the transmission of other loads, **characterized in that**,
in operation, the rotor (62) of the generator is directly driven by the shaft (30),
the generator rotor (62) is rotatably mounted on the frame (20), and adapted to rotate around said frame (20), and
the shaft (30) is connected to a rear side of the generator rotor (62) through a non-rigid second coupling element (70) mounted on the shaft at the rear side of the generator rotor (62), wherein said second non-rigid coupling element is adapted to transmit torque about the shaft's rotational axis from the shaft (30) to the rotor (62) of the generator while substantially limiting the transmission of other loads from the shaft (30) to the generator (60).

2. Wind turbine according to claim 1, wherein said second coupling element (70) comprises substantially circular splines (33).

3. Wind turbine according to claim 1, wherein said second coupling element (70) comprises a centre piece from which a plurality of spokes extend substantially radially, said centre piece being mounted on said shaft (30), and wherein
flexible elements are arranged to connect the spokes to the generator rotor (62).

4. Wind turbine according to claim 1, wherein said second coupling element (70) comprises a centre piece mounted on said shaft (30), said centre piece comprising a substantially circular disc, said circular disc being connected to the generator rotor through a plurality of circumferentially arranged axial bolts, wherein said bolts are arranged within said circular disc with a plurality of flexible bushings.

5. Wind turbine according to any previous claim, wherein said first coupling element (40b, 40c) comprises a centre piece from which a plurality of spokes (44) extend substantially radially, said centre piece being mounted on said shaft (30), and wherein
the hub (10) is provided with a plurality of circumferentially arranged axial protrusions, and wherein
flexible elements (42b) are arranged to connect the spokes (44) to said protrusions.

6. Wind turbine according to any of claims 1-4, wherein said first coupling element (40a) comprises a centre piece mounted on said shaft (30), said centre piece comprising a substantially circular disc (46), said circular disc (46) being connected to the hub (10) through a plurality of circumferentially arranged axial bolts (41), wherein said bolts (41) are arranged within said circular disc (46) with a plurality of flexible bushings (42a).

7. Wind turbine according to claim 5 or 6, wherein said centre piece is mounted on said shaft (30) with a shrink disc (45).

8. Wind turbine according to any previous claim, wherein the generator rotor (62) is arranged radially inside of the generator stator (64).

9. Wind turbine according to any previous claim, wherein the generator rotor (62) is arranged radially outside of the generator stator (64).

10. Wind turbine according to any previous claim, wherein said shaft (30) comprises a front part and a rear part connected with each other.

11. Wind turbine according to any previous claim, wherein said frame (20) comprises a front part (20a), a middle part (20b), and a rear part (20c), wherein the hub (10) is rotatably mounted on said front part (20a), and
the middle part (20b) of said frame is rotatably mounted on a tower (50).

12. Wind turbine according to any preceding claim, wherein said shaft (30) is a tubular hollow shaft.

## Patentansprüche

1. Windenergieanlage umfassend eine Nabe (10), die ein Rotorblatt oder mehrere trägt, einen Generator (60), eine Welle (30) und ein erstes Kupplungselement (40, 40a, 40b, 40c), das auf der Welle (30) montiert ist und das die Welle (30) an eine Vorderseite der Nabe (10) betriebsfähig ankoppelt, wobei die Nabe (10) drehbar auf einem Gestell (20) montiert ist und angepasst ist, um um das Gestell (20) herum zu drehen, wobei die Welle (30) mindestens teilweise innerhalb des Gestells (20) bereitgestellt ist, und wobei das erste Kupplungselement (40, 40a, 40b, 40c) angepasst ist, um das Drehmoment um die Nabendrehachse von der Nabe (10) auf die Welle (30) zu übertragen, während die Übertragung von anderen Belastungen im Wesentlichen eingeschränkt wird, **dadurch gekennzeichnet, dass** der Generatorsläufer (62) im Betrieb direkt von der Welle (30) betätigt wird, der Generatorläufer (62) drehbar auf dem Gestell (20) montiert ist und angepasst ist, um um das Gestell (20) herum zu drehen und die Welle (30) mit einer Rückseite des Generatorläufers (62) durch ein nicht starres zweites Kupplungselement (70) verbunden ist, das auf der Welle an der Rückseite des Generatorläufers (62) montiert ist, wobei das zweite nicht starre Kupplungselement angepasst ist, um das Drehmoment um die Wellendrehachse (30) von der Welle (30) auf den Generatorläufer (62) zu übertragen, während die Übertragung von anderen Belastungen von der Welle (30) auf den Generator (60) im Wesentlichen eingeschränkt wird.

2. Windenergieanlage nach Anspruch 1, wobei das zweite Kupplungselement (70) eine Vielkeil-Verzahnung (33) umfasst, die im Wesentlichen kreisförmig ist.

3. Windenergieanlage nach Anspruch 1, wobei das zweite Kupplungselement (70) ein Mittelteil umfasst, aus welchem sich eine Vielzahl von Radspeichen im Wesentlichen radial ausstrecken, wobei das Mittelteil auf der Welle (30) montiert ist, und wobei flexible Elemente angeordnet sind, um die Radspeichen mit dem Generatorläufer (62) zu verbinden.

4. Windenergieanlage nach Anspruch 1, wobei das zweite Kupplungselement (70) ein Mittelteil umfasst, das auf der Welle (30) montiert ist, wobei das Mittelteil eine Scheibe umfasst, die im Wesentlichen kreisförmig ist, wobei die kreisförmige Scheibe mit dem Generatorläufer durch eine Vielzahl von umlaufend angeordneten axialen Bolzen verbunden ist, wobei die Bolzen innerhalb der kreisförmigen Scheibe mit einer Vielzahl von flexiblen Hülsen angeordnet sind.

5. Windenergieanlage nach einem der vorhergehenden Ansprüche, wobei das erste Kupplungselement (40b, 40c) ein Mittelteil umfasst, aus welchem sich eine Vielzahl von Radspeichen (44) im Wesentlichen radial ausstrecken, wobei das Mittelteil auf der Welle (30) montiert ist, und wobei die Nabe (10) mit einer Vielzahl von umlaufend angeordneten axialen Vorsprüngen bereitgestellt ist, und wobei flexible Elemente (42b) angeordnet sind, um die Radspeichen (44) mit den Vorsprüngen zu verbinden.

6. Windenergieanlage nach einem der Ansprüche 1-4, wobei das erste Kupplungselement (40a) ein Mittelteil umfasst, das auf der Welle (30) montiert ist, wobei das Mittelteil eine Scheibe umfasst, die im Wesentlichen kreisförmig ist, wobei die kreisförmige Scheibe (46) mit der Nabe (10) durch eine Vielzahl von umlaufend angeordneten axialen Bolzen (41) verbunden ist, wobei die Bolzen (41) innerhalb der kreisförmigen Scheibe (46) mit einer Vielzahl von flexiblen Hülsen (42a) angeordnet sind.

7. Windenergieanlage nach Anspruch 5 oder 6, wobei das Mittelteil auf der Welle (30) mit einer Schrumpfscheibe (45) montiert ist.

8. Windenergieanlage nach einem der vorhergehenden Ansprüche, wobei der Generatorläufer (62) radial innherlab des Generatorstators (64) angeordnet ist.

9. Windenergieanlage nach einem der vorhergehenden Ansprüche, wobei der Generatorläufer (62) radial außerhalb des Generatorstators (64) angeordnet ist.

10. Windenergieanlage nach einem der vorhergehenden Ansprüche, wobei die Welle (30) eine Vorderseite und eine Rückseite umfasst, die miteinander verbunden sind.

11. Windenergieanlage nach einem der vorhergehenden Ansprüche, wobei das Gestell (20) eine Vorderseite (20a), eine mittlere Seite (20b) und eine Rückseite (20c) umfasst, wobei die Nabe auf der Vorderseite (20a) drehbar montiert ist, und die mittlere Seite (20b) des Gestells auf einem Turm (50) drehbar montiert ist.

12. Windenergieanlage nach einem der vorhergehenden Ansprüche, wobei die Welle (30) eine röhrenförmige Hohlwelle ist.

## Revendications

1. Éolienne comprenant un moyeu (10) portant une ou plusieurs pales, un générateur (60), un arbre (30), et un premier élément d'accouplement (40, 40a, 40b, 40c) monté sur l'arbre (30) et reliant, de manière opérationnelle, l'arbre (30) à un devant du moyeu (10), dans laquelle le moyeu (10) est monté sur un châssis (20) et est adapté afin de pivoter autour dudit châssis (20), l'arbre (30) est fourni au moins partiellement à l'intérieur dudit châssis (20), et dans laquelle le premier élément d'accouplement (40, 40a, 40b, 40c) est adapté pour transmettre le couple de rotation autour de l'axe de rotation du moyeu (10) audit arbre (30) alors que la transmission d'autres charges est essentiellement limitée, **caractérisée en ce que** l'opération du rotor (62) du générateur est actionnée directement par l'arbre (30), le rotor (62) du générateur est monté à rotation sur le châssis (20) et est adapté pour pivoter autour dudit châssis (20) et l'arbre (30) est connecté à un dernier du rotor (62) du générateur moyennant un deuxième élément d'accouplement (70) non rigide monté sur l'arbre au dernier du rotor (62) du générateur, dans laquelle ledit deuxième élément d'accouplement non rigide est adapté pour transmettre le couple de rotation autour de l'axe de rotation de l'arbre (30) au rotor (62) du générateur alors que la transmission d'autres charges de l'arbre (30) au générateur (60) est essentiellement limitée.

2. Éolienne selon la revendication 1, dans laquelle ledit deuxième élément d'accouplement (70) comprend des cannelures (33) essentiellement circulaires.

3. Éolienne selon la revendication 1, dans laquelle ledit deuxième élément d'accouplement (70) comprend une pièce centrale dès laquelle s'étend radialement une pluralité de cannelures, étant ladite pièce centrale montée sur ledit arbre (30), et dans laquelle des éléments flexibles sont disposés afin de connecter les cannelures au rotor (62) du générateur.

4. Éolienne selon la revendication 1, dans laquelle ledit deuxième élément d'accouplement (70) comprend une pièce centrale montée sur ledit arbre (30), comprenant ladite pièce centrale un disque essentiellement circulaire, étant ledit disque circulaire connecté au rotor du générateur moyennant une pluralité de boulons axiales disposés circonférentiellement, dans laquelle lesdits boulons sont disposés dans ledit disque circulaire avec une pluralité de douilles flexibles.

5. Éolienne selon l'une quelconque des revendications précédentes, dans laquelle ledit premier élément d'accouplement (40b, 40c) comprend une pièce centrale dès laquelle s'étend de façon essentiellement radiale une pluralité de cannelures (44), étant ladite pièce centrale montée sur ledit arbre (30), et dans laquelle le moyeu (10) est fourni avec une pluralité de saillies axiales disposées circonférentiellement, et dans laquelle des éléments flexibles (42b) sont disposés afin de connecter les cannelures (44) aux dites saillies.

6. Éolienne selon l'une quelconque des revendications 1-4, dans laquelle ledit premier élément d'accouplement (40a) comprend une pièce centrale montée sur ledit arbre (30), comprenant ladite pièce centrale un disque essentiellement circulaire (46), étant connecté ledit disque circulaire (46) au moyeu (10) moyennant une pluralité de boulons (41) axiaux disposés circonférentiellement, dans laquelle lesdits boulons sont disposés dans ledit disque circulaire (46) avec une pluralité de douilles (42a) flexibles.

7. Éolienne selon la revendication 5 ou 6, dans laquelle ladite pièce centrale est montée sur ledit arbre (30) avec une frette (45).

8. Éolienne selon l'une quelconque des revendications antérieures, dans laquelle le rotor (62) du générateur est disposé radialement dans le stator (64) du générateur.

9. Éolienne selon l'une quelconque des revendications antérieures, dans laquelle le rotor (62) du générateur est disposé radialement à l'extérieur du stator (64) du générateur.

10. Éolienne selon l'une quelconque des revendications antérieures, dans laquelle ledit arbre (30) comprend un devant et un derrière connectés l'un avec l'autre.

11. Éolienne selon l'une quelconque des revendications antérieures, dans laquelle ledit châssis (20) comprend un devant (20a), une partie centrale (20b), et un derrière (20c), dans laquelle le moyeu est monté à rotation sur ledit devant (20a), et la partie centrale (20b) dudit châssis est montée à rotation sur une tour (50).

12. Éolienne selon l'une quelconque des revendications précédentes, dans laquelle ledit arbre (30) est un arbre creux tubulaire.
